Europäisches Patentamt

European Patent Office

Office européen des brevets

(19)

(11) Veröffentlichungsnummer : **0 092 083 B2**

(12) # NEUE EUROPÄISCHE PATENTSCHRIFT

(45) Veröffentlichungstag der neuen Patentschrift :
**18.12.91 Patentblatt 91/51**

(51) Int. Cl.⁵ : **H04M 1/65, H04M 11/04,**
**H03K 3/57**

(21) Anmeldenummer : **83103210.7**

(22) Anmeldetag : **31.03.83**

(54) **Elektronischer Textgeber zur Abgabe und/oder Aufnahme von Texten Über eine Fernsprechleitung.**

(30) Priorität : **17.04.82 DE 3214249**

(43) Veröffentlichungstag der Anmeldung :
**26.10.83 Patentblatt 83/43**

(45) Bekanntmachung des Hinweises auf die
Patenterteilung :
**04.02.87 Patentblatt 87/06**

(45) Bekanntmachung des Hinweises auf die
Entscheidung über den Einspruch :
**18.12.91 Patentblatt 91/51**

(84) Benannte Vertragsstaaten :
**AT CH DE GB IT LI LU NL SE**

(56) Entgegenhaltungen :
**EP-A- 0 065 097**
**DE-A- 2 118 938**

(56) Entgegenhaltungen :
**DE-A- 3 003 545**
**US-A- 4 241 238**
**US-A- 4 272 810**
**FUNKSCHAU, Nr. 2, Januar 1982, Seiten 56-57,**
**München, DE; H.-J. PROBST u.a.:**
**"Sprechendes Telefon"**
**IBM Technical Disdonire Bulletin, Vol. 19,No.6,**
**nov. 1979,Seite 2357-2358.**

(73) Patentinhaber : **Neumann Elektronik GmbH**
**Bülowstrasse 104 - 110**
**W-4330 Mülheim 1 (DE)**

(72) Erfinder : **Neumann, Dirk**
**Schemelsbruch 11**
**W-4330 Mülheim 1 (DE)**

(74) Vertreter : **Feder, Heinz, Dr. et al**
**Dominikanerstrasse 37**
**W-4000 Düsseldorf 11 (DE)**

## Beschreibung

Die Erfindung betrifft einen elektronischen Textgeber zur Abgabe und/oder Aufnahme von Texten in Form von analogen elektrischen Signalen über eine Fernsprechleitung, bei dem die Texte in digitaler Form in einem Textdatenspeicher speicherbar sind und das Ein/Auslesen der Textdaten durch eine, einen Mikroprozessor enthaltende Steuervorrichtung erfolgt und zwischen dem Ein/Ausgang für Textdaten und dem Textdatenspeicher ein Analog/Digital-Digital/Analog-Wandler angeordnet ist und der eine Pausenerkennungsvorrichtung zur Erkennung einer Pause in den digitalen Daten eines aufzunehmenden oder abzugebenden Textes aufweist sowie einen Zähler, der bei Textaufnahme durch ein Pausenanfangssignal in Vorwärtsrichtung gestartet und durch ein Pausenendesignal gestoppt wird, wobei im Textdatenspeicher der Pausenanfang gespeichert und dann während des Vorwärtslaufes des Zählers das Einlesen von Daten unterbrochen wird und am Ende des Vorwärtslaufes vom Zähler ein die ausgezählte Pausenlänge kennzeichnendes Signal abgegeben und gespeichert wird und bei dem bei Textabgabe ein weiterer Zähler durch die Signale für den Pausenanfang und die Pausenlänge auf einen der gespeicherten Pausenlänge entsprechenden Wert voreingestellt und in Rückwärtsrichtung gestartet wird, wobei während des Rückwärtslaufes dieses Zählers das Auslesen von Daten aus dem Textdatenspeicher unterbrochen wird und der Zähler einer Vorrichtung zur Erzeugung von digitalen Pausensignalen ansteuert, die dem Digital/Analog-Wandler zugeführt werden und am Ende des Rückwärtslaufes ein Pausenendesignal abgegeben wird.

Ein derartiger Textgeber ist beispielsweise in der Druckschrift "IBM Technical Disclosure Bulletin Vol. 19, No. 6, November 1976, S. 2357/2358" beschrieben.

Die bekannte Einrichtung ist zweiteilig aus einem Encoder und einem Decoder aufgebaut und besitzt zwei unterschiedliche Zähler, von denen einer bei der Textaufnahme und der andere bei der Textabgabe wirksam wird. Weiterhin arbeitet sie offensichtlich mit flüchtigen Festkörperspeichern, was den Nachteil hat, daß die eingespeicherten Daten bei einem Spannungsausfall verlorengehen. -

Es ist weiterhin aus der DE-A1-3 024 688 bekannt, bei einem Telefon-Anrufbeantworter zur Speicherung der abzugebenden Texte Speicher zu verwenden, die aus elektrisch programmierbaren und löschbaren Festwertspeichern sogenannten EEPROM's bestehen.

Aus der DE-A1-28 54 401 und DE-A1-30 03 545 ist es bekannt, in einem Anrufbeantworter, bei dem zur Speicherung der aufzunehmenden und abzugebenden Daten ein programierbarer, flüchtiger Festkörperspeicher verwendet wird, einen Sprachpausenschalter anzuordnen, der bei Nichtvorhandensein eines digitalen Sprachsignals den Textdatenspeicher in einen Bereitschafts- oder Wartezustand versetzt, in dem keine Daten eingespeichert werden. Nicht gelöst ist bei dieser bekannten Vorrichtung das Problem, wie die bei der Aufnahme unterdrückten Sprachpausen bei der Wiedergabe wieder erzeugt werden sollen. Dies hat zur Folge, daß nur längere Sprachpausen unterdrückt werden können, und die Ersparnis an Speicherplatz relativ gering bleibt.

Durch die Verwendung von flüchtigen Festkörperspeichern hat diese bekannte Einrichtung zudem den Nachteil, daß die eingespeicherten Daten bei einem Spannungsausfall verlorengehen.

Die der Erfindung zugrunde liegende Aufgabe bestand darin, einen elektronischen Textgeber der eingangs angegebenen Art, der zur Aufnahme und Abgabe von Texten geeignet sein soll, so auszugestalten, daß der Benutzer sich bestimmte Texte oder Textteile selbst aufsprechen kann, wobei diese Texte oder Textteile bei einem Spannungsausfall nicht verlorgengehen sollen und der Textgeber am Aufstellungsort unabhängig von einer zusätzlichen Stromversorgung sein soll.

Die Lösung der oben angegebenen Aufgabe erfolgt mit den im kennzeichnenden Teil des Patentanspruchs 1 angegebenen Merkmalen.

Bei dem erfindungsgemäßen Textgeber sind die elektrisch programmierbaren und löschbaren Festwertspeicher vor allem deswegen vorgesehen, damit der Benutzer sich bestimmte Texte oder Textteile selbst aufsprechen kann, die er dann unter Umständen mit fest eingespeicherten Texten kombinieren kann. Der Textgeber ist am Aufstellungsort unabhängig von einer zusätzlichen Stromversorgung, benötigt also keinen eigenen Anschluß an die Netzspannung oder eine andere Spannungsquelle. Eine derartige Unabhängigkeit des Textgebers von einer zusätzlichen Stromversorgung ist von besonderer Bedeutung, wenn der Textgeber Teil eines Anrufbeantworters oder einer Notrufeinrichtung ist, also einem Gerät, das auch dann betriebsbereit bleiben soll, wenn beispielsweise ein Spannungsausfall im örtlichen Netz vorliegt. Hierbei war das Problem zu lösen, daß einerseits einer Fernsprechleitung im allgemeinen nur sehr wenig elektrische Energie entnommen werden darf und andererseits die Programmier- und Löschspannungen der verwendeten Festwertspeicher relativ hoch liegen, d.h. höher sind als die normale Betriebsspannung. Bei bekannten Vorrichtungen wird die Programmierspannung durch einen DC/DC-Wandler erzeugt. Ein solcher Wandler würde aber der Fernsprechleitung ständig einen Ruhestrom entnehmen. Mit der Erfindung wird erreicht, daß die Programmier- und Löschspannungen den Festwertspeichern nur dann zugeführt werden, wenn sie benötigt werden. Die hierzu verwendete Vorrichtung benötigt nur sehr wenig Energie. Dies wird noch dadurch unterstützt, daß während der Textpausen keine Daten in die Festwertspeicher geschrieben werden müssen und zu diesen Zeiten eine Programmierspannung also nicht erforderlich ist. Dadurch, daß die Programmierspannung nur in Einzelimpulsen und unregelmäßigen Abständen zugeführt werden muß, läßt sich eine erhebliche Einsparung an elektrischer Energie, die über die Fernsprechleitung zugeführt werden muß, erzielen.

Vorteilhafte Ausführungsformen der Erfindung sind in den Unteransprüchen beschrieben.

So ist es beispielsweise gemäß den Ansprüchen 3 bis 5 vorteilhaft, wenn die Vorrichtung zur Erkennung der Textpausen eine Zeitschaltung ansteuert, durch welche bei Überschreitung bestimmter, vorgegebener Pausenlängen Schaltvorgänge ausgelöst werden.

Bei dem erfindungsgemäßen, elektronischen Textgeber sind die elektrisch programmierbaren und löschbaren Festwertspeicher vor allem deswegen vorgesehen, damit der Benutzer sich bestimmte Texte oder Textteile selbst aufsprechen kann, die er dann unter Umständen mit fest eingespeicherten Texten kombinieren kann. Die Zeitschaltung kann nun so ausgelegt sein, daß, wenn zu Beginn einer Aufnahme eine Textpause eintritt, beispielsweise infolge einer plötzlichen Gedächtnislücke des Benutzers beim Aufsprechen, die Aufnahme unterbrochen und erneut gestartet wird. Ebenso kann vorgesehen sein, daß während des Aufsprechens Pausen, die eine bestimmte Länge überschreiten, auf eine vorgegebene Länge normiert werden und es kann vorgesehen sein, daß, wenn am Ende der Aufnahme vergessen wird abzuschalten, nach Überschreiten einer bestimmten Pausenlänge das Gerät automatisch abgeschaltet wird.

Die Verwendung eines Impulsübertragers in der die Programmier- oder Löschimpulse erzeugenden Stufe gemäß Anspruch 7 hat den Vorteil, daß eine derartige Stufe keinerlei Ruhestrom benötigt und somit die Fernsprechleitung noch weniger belastet.

Da beim Einschalten des Textgebers die Speisespannung infolge vorhandener, hoher Kapazitäten im allgemeinen relativ langsam ansteigt, wodurch undefinierte Zustände in den verwendeten Schaltungen, insbesondere dem Mikroprozessor, auftreten könnten, ist es vorteilhaft, wenn der Textgeber eine Einschalttriggerstufe nach Patentanspruch 9 aufweist, die die besondere Eigenschaft hat, daß sie nach dem Wirksamwerden wieder abgeschaltet wird und somit keinen Ruhestrom aus der Fernsprechleitung entnimmt.

Schließlich ist es zur weiteren Ersparnis der aus der Fernsprechleitung zu entnehmenden elektrischen Energie vorteilhaft, wenn gemäß Patentanspruch 11 die Speisespannungen einzelnen Schaltstufen, insbesondere den Festwertspeichern nur dann zugeführt werden, wenn sie benötigt werden.

Der erfindungsgemäße elektronische Textgeber ist besonders gut einsetzbar zum Aufbau eines Fernsprechapparates mit automatischer Hinweisansage. Dabei können die Hinweisansagen teils in üblichen Festwertspeichern (EPROM) eingespeicherte fest vorgegebene Textteile sein, die mit aufsprechbaren, in die elektrisch programmierbaren und löschbaren Festwertspeicher (EEPROM) einspeicherbaren Textteilen kombinierbar sind. Auf diese Weise ist eine große Freiheit in der Textgestaltung erreichbar, indem beispielweise die Anrede oder bestimmte, veränderliche Daten aufgesprochen und mit anderen fest vorgegebenen Ansagetexten kombiniert werden können.

Im folgenden wird anhand der beigefügten Zeichnungen ein Ausführungsbeispiel für einen elektronischen Textgeber nach der Erfindung näher erläutert.

In den Zeichnungen zeigen

Fig. 1 ein Blockschaltbild der wesentlichen Teile eines elektronischen Textgebers;

Fig. 2 einen Ausschnitt aus der Schaltung gemäß Fig. 1 in detaillierterer Darstellungsart;

Fig. 3 ein Einzelschaltbild einer Programmier-Impulsstufe nach Fig. 1;

Fig. 4 eine Einschalttriggerstufe für einen elektronischen Textgeber gemäß Fig. 1 bis 3.

In den Zeichnungen sind lediglich die Teile eines elektronischen Textgebers, der beispielsweise als Fernsprechapparat mit automatischer Hinweisansage an eine Fernsprechleitung angeschlossen ist, dargestellt, die für die Erfindung von Bedeutung sind. Verschiedene an sich bekannte Schaltstufen, wie beispielsweise die mit dem Fernsprechapparat zusammenhängenden Kreise sowie die bei der Textabgabe und -aufnahme die analogen elektrischen Signale verarbeitenden Schaltkreise, die in an sich bekannter Bauart ausgeführt sein können, sind nicht dargestellt.

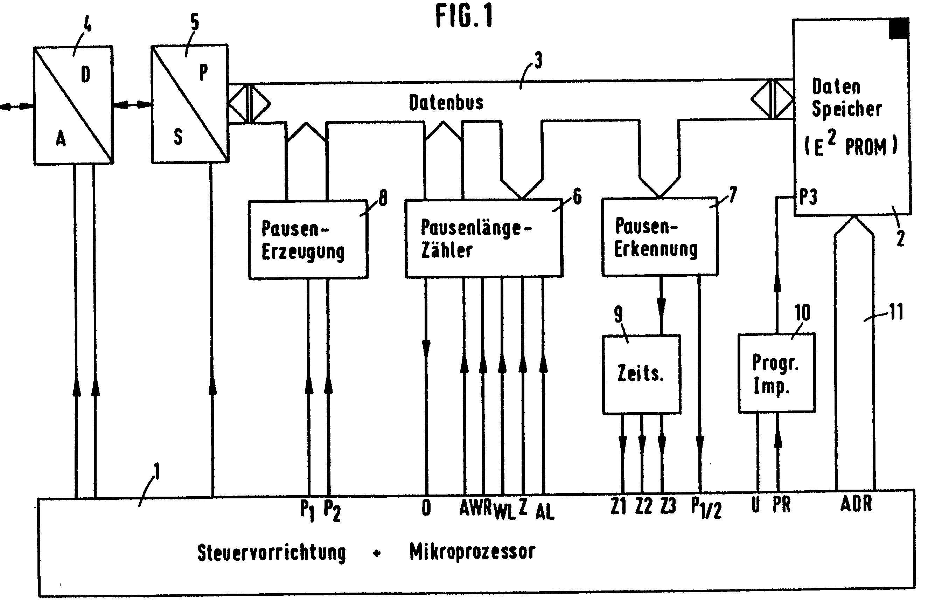

Der in Fig. 1 dargestellte, elektronische Textgeber besitzt eine einen Mikroprozessor enthaltende Steuervorrichtung 1, die ebenfalls in an sich bekannter bauart ausgeführt ist und nicht näher erläutert wird. Von dieser Steuervorrichtung werden sämtliche die übrigen Schaltstufen ansteuernden Steuersignale abgegeben und die entsprechenden Antwortsignale aufgenommen und verarbeitet.

Die in Fig. 1 dargestellte Einrichtung besitzt einen Datenspeicher 2, von dem im vorliegenden Fall angenommen sei, daß er aus elektrisch programmierbaren und löschbaren Festwertspeichern, sogenannten EEPROM's, aufgebaut ist. Die als analoge elektrische Signale bei der Aufnahme eingegebenen Texte gelangen zunächst auf einen Analog/Digital-Wandler 4 und dann über einen Seriell/-Parallel-Wandler 5 auf eine Datenbus-Leitung 3, über die sie dem Datenspeicher 2 zugeführt werden, wobei die Adressierung über einen

3

Adressenbus 11 von der Steuervorrichtung 1 aus erfolgt. Bei der Abgabe von Texten werden die Daten dem Datenspeicher 2 entnommen, gelangen über die Datenbus-Leitung 3 zu der in diesem Falle als Parallel/Seriell-Wandler wirksamen Vorrichtung 5 und von dort über die als Digital/Analog-Wandler wirksame Stufe 4 sowie die nicht dargestellten Niederfrequenz-Kreise auf die ebenfalls nicht dargestellte Fernsprechleitung.

Im folgenden wird vorausgesetzt, daß die eingegebenen analogen elektrischen Signale nach dem Verfahren der Delta-Modulation digitalisiert werden und die seriellen, digitalen Daten in einzelnen Datenworten von jeweils 8 Bit auf die Datenbus-Leitung 3 gegeben werden. Gemäß dem gewählten Modulationsverfahren wird eine Pause auf der Datenbus-Leitung 3 als "Pausenwort" der Form 10101010 (AA Hex) oder 01010101 (55 Hex) dargestellt. Die Länge einer Pause kann somit ermittelt werden, indem die Anzahl der unmittelbar aufeinanderfolgenden Pausenworte der oben angegebenen Form gezählt und gespeichert wird. Dies geschieht, wie aus Fig. 1 zu ersehen, mittels einer Pausenerkennungsvorrichtung 7, deren Wirkungsweise weiter unten erläutert wird. Das Auszählen der Pausenlänge erfolgt mittels eines Pausenlängezählers 6, der ebenfalls weiter unten näher beschrieben wird.

Bei der Aufnahme von Texten wird jeweils beim Erkennen eines Pausenwortes durch die Pausenerkennungsvorrichtung 7 eine Steuerung veranlaßt, durch welche lediglich das erste auftretende Pausenwort in den Datenspeicher eingespeichert wird und dann das Einlesen weiterer Pausenworte unterbrochen und der Pausenlänge-Zähler 6 gestartet wird. Am Ende der Pause wird, ebenfalls durch die Pausenerkennungsvorrichtung 7, veranlaßt, daß der Pausenlänge-Zähler 6 gestoppt und der ausgezählte Wert direkt im Anschluß an das bereits gespeicherte Pausenwort im Datenspeicher 2 gespeichert wird.

Auf diese Weise können auch sehr kurze Pausen von nur wenigen Pausenwörtern Länge erkannt und gespeichert werden, wobei die Anzahl der durch die Pause belegten Speicherplätze unabhängig von der Länge der Pause ist. Die Länge jeder Pause ist im Datenspeicher festgehalten und kann aus diesem Grunde bei der Abgabe der Texte genau reproduziert werden. Dies erfolgt in der Weise, daß beim Auslesen der Textdaten aus dem Datenspeicher 2 das Auftreten eines Pausenwortes wiederum erkannt und der Pausenlänge-Zähler 6 auf den im Datenspeicher 2 eingespeicherten Wert der Pausenlänge voreingestellt wird. Der Pausenlänge-Zähler 6 wird dann in Rückwärtsrichtung gestartet, während gleichzeitig das weitere Auslesen von Daten aus dem Textdatenspeicher unterbrochen wird. Der Pausenlänge-Zähler 6 veranlaßt die Ansteuerung einer Vorrichtung 8 zur Pausenerzeugung, die in weiter unten näher erläuterter Weise auf der Datenbus-Leitung 3 Pausenworte erzeugt, die dem Parallel/-Seriell-Wandler 5 zugeführt werden und durch den Digital/Analog-Wandler 4 in Sprachpausen verwandelt werden.

Am Ende des Rückwärtslaufes des Pausenlänge-Zählers 6 wird ein Pausenendesignal abgegeben und das weitere Auslesen von Textdaten aus dem Datenspeicher 2 wieder aufgenommen.

Durch die Pausenerkennungsvorrichtung 7 wird weiterhin eine Zeitschaltung angesteuert, die in ihrem an sich bekannten Aufbau im folgenden nicht weiter erläutert wird und beispielsweise eine auf verschiedene Werte einstellbare Kippstufe enthalten kann. Mit dieser Zeitschaltung 9 können beispielsweise drei verschiedene Pausenlängen vorgegeben werden, womit beispielsweise folgendes erreicht werden kann:

Bei Beginn der Aufnahme, also bevor die ersten Textdaten eingespeichert sind, wird beim Überschreiten einer ersten Pausenlänge von zwei Sekunden die Aufnahme abgebrochen und sofort wieder gestartet. Das entsprechende Signal wird von der Zeitschaltung 9 an den Eingang Z1 der Steuervorrichtung gegeben. Hiermit wird erreicht, daß bei einer Wiedergabe eines Textes nicht am Anfang eine unnötig lange Sprachpause steht. Wenn innerhalb einer Aufnahme Pausen auftreten, die länger sind als ein zweiter vorgegebener Pausenwert von beispielsweise zwei Sekunden, gibt die Zeitschaltung 9 ein Signal auf den Eingang Z2 der Steuervorrichtung, wodurch veranlaßt wird, daß diese Pausen auf einen Wert von zwei Sekunden normiert werden. Hierdurch wird erreicht, daß bei der Wiedergabe auch innerhalb einer Aufnahme keine unnötig langen, zufällig bei der Aufnahme entstandenen Sprachpausen entstehen. Schließlich wird am Ende der Aufnahme, bei einer Pausenlänge oberhalb eines dritten vorgegebenen Pausenwertes von beispielsweise acht Sekunden, ein Signal auf den Eingang Z3 der Steuervorrichtung gegeben und die Aufnahme damit abgebrochen.

Die Programmierimpulse für die im Datenspeicher Z enthaltenen elektrisch programmierbaren und löschbaren Festwertspeicher werden von einer Impulsstufe 10 erzeugt, welche über den Ausgang U der Steuervorrichtung an die Speisespannung angeschlossen ist und über den Ausgang PR´ entsprechende Programmiersignale erhält. Auch die Impulsstufe 10 wird weiter unten näher erläutert.

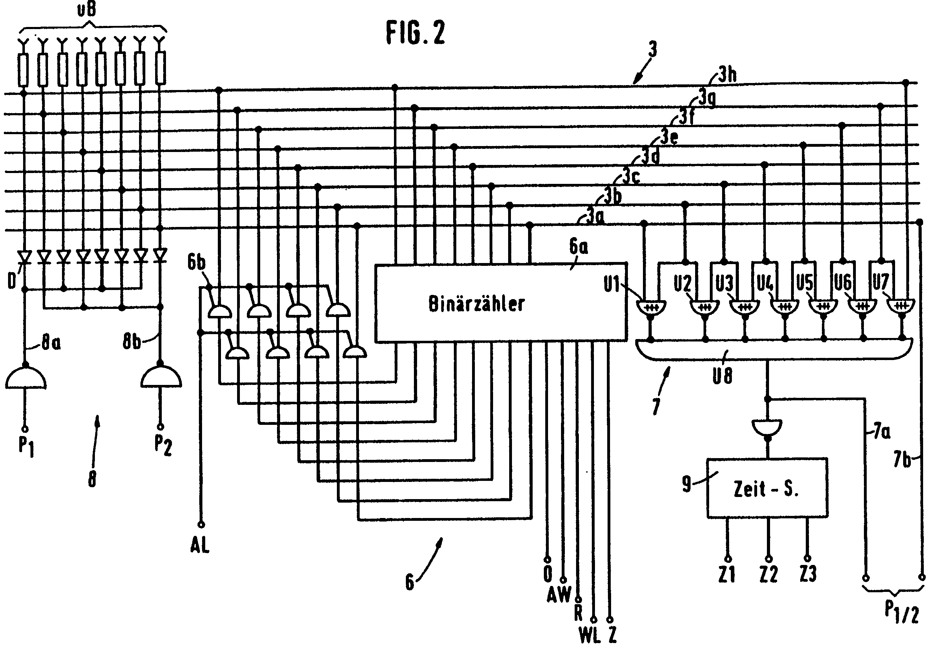

Im folgenden wird anhand der Figuren 2 bis 4 die Funktionsweise der einzelnen Stufen der Vorrichtung nach Fig. 1 näher erläutert.

In Fig. 2 ist ein Abschnitt der Datenbus-Leitung 3 mit den Einzelleitungen 3a bis 3h dargestellt.

Die Pausenerkennungsvorrichtung 7 besteht aus einer aus den EXNOR-Gattern U1 bis U7 sowie einem UND-Gatter U8 aufgebauten Gatterschaltung in der aus Fig. 2 ersichtlichen Weise. Man kann aus der Schaltung direkt ablesen, daß am Ausgang des UND-Gatters U8 ein Signal erscheint, wenn eines der beiden oben näher erläuterten Pausenworte auf der Datenbus-Leitung 3 vorliegt, wobei über die Leitung 7a die Tatsache der Pause und über die Leitung 7b die Art der Pause gemäß dem Wert "0" oder "1" auf der Leitung 3a an den gemeinsam dargestellten Eingang P1/2 der Steuervorrichtung 1 gegeben wird.

Der Pausenlänge-Zähler 6 besteht einerseits aus einem Binärzähler 6a, dem von der Steuervorrichtung 1 aus über Z die Signale für die Zählschritte, über AW ein Signal zur Unterscheidung von Wiedergabe und Aufnahme, über WL ein Signal zum Einlesen der Pausenlänge und zum Voreinstellen des Zählers, über R ein Rücksetzsignal gegeben werden, während über O das Pausenendesignal vom Zähler an die Steuervorrichtung 1 gegeben wird. Wenn beim Vorwärtszählen die Kapazität des Binärzählers 6a überschritten ist, wird vom Binärzähler 6a über den Eingang O an die Steuervorrichtung 1 ein Überlaufsignal gegeben. Von der Steuervorrichtung 1 aus wird dann die maximale Länge der ausgezählten Pause in den Datenspeicher 2 eingespeichert, der Binärzähler 6a rückgesetzt, das Pausenwort erneut eingespeichert und der Binärzähler 6a wieder in Vorwärtsrichtung gestartet.

Bei der Aufnahme von Pausen zählt der Binärzähler 6a die Pausenworte und gibt am Ende des Zählvorganges über eine Schaltung 6b, die aus den einzelnen Zweigen 3a bis 3h der Datenbus-Leitung 3 zugeordneten steuerbaren Schaltern besteht und die von der Steuervorrichtung 1 über den Ausgang AL angesteuert werden; ein dem ausgezählten Pausenwert entsprechendes Signal auf die Datenbus-Leitung 3, das, wie bereits erläutert, im Anschluß an das erste Pausenwort in den Datenspeicher 2 eingespeichert wird.

Bei der Wiedergabe von Pausen läuft der voreingestellte Binärzähler 6a rückwärts und veranlaßt damit die Ansteuerung der Pausenerzeugungsvorrichtung 8 über die Ausgänge P1 und P2 der Steuervorrichtung 1, wobei der Ausgang P1 dem erstgenannten Typ eines Pausenwortes und der Ausgang P2 dem zweitgenannten Typ eines Pausenwortes zugeordnet sein kann.

Die Erzeugung der Pausenworte erfolgt in der Weise, daß an die Leitungen 3a bis 3h jeweils eine den Wert "1" kennzeichnende Spannung UB angelegt und dann durch das von P1 über die Leitung 8a oder von P2 über die Leitung 8b und die Dioden D zugeführte Signal jeweils die Leitungen 3b, 3d, 3f, 3h oder 3a, 3c, 3e, 3g auf den Wert "0" gesetzt werden. Es entstehen dann auf der Datenbus-Leitung 3 die oben erläuterten Pausenworte, solange der Binärzähler 6a rückwärts läuft.

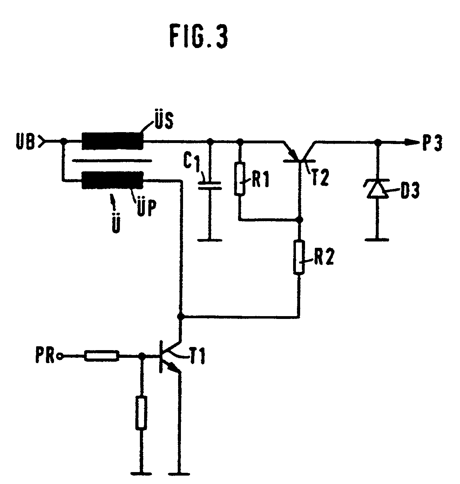

Beim Einlesen von Daten in die elektrisch programmierbaren und löschbaren Festwertspeicher des Datenspeichers 2 werden die Programmierimpulse von der bereits erwähnten Programmierimpulsstufe 10 erzeugt, die in Fig. 3 genauer dargestellt ist.

Sie weist einen Impulsübertrager Ü auf, bei dem jeweils ein Ende der Primärwicklung ÜP und der Sekundärwicklung ÜS mit der die Speisespannung UB führenden Zuleitung verbunden ist. Die Primärwicklung ÜP des Übertragers Ü ist über einen Schalttransistor P1 mit Masse verbunden. Die Ansteuerimpulse werden vom Ausgang PR der Steuervorrichtung 1 auf die Basis des Schalttransistors T1 gegeben, bei dessen Durchschalten in der Sekundärwicklung ÜS ein Impuls erzeugt wird, dessen Höhe vom Wicklungsverhältnis abhängig ist und der zur anliegenden Spannung UB, auf die der Kondensator C1 aufgeladen ist, addiert wird. Der Impuls wird über einen zweiten Schalttransistor T2 abgegeben und gelangt, wie aus Fig. 1 ersichtlich, auf den Eingang P1 für die Programmierimpulse des Datenspeichers 2. Durch den Schalttransistor T2, dessen Basis über einen Spannungsteiler R1-R2 mit dem von der Primärwicklung ÜP zu Masse führenden Leitung verbunden ist, wird erreicht, daß die abgegebenen Impulse sehr exakt wieder abgeschaltet werden, so daß sie nicht länger anliegen als für die Programmierung erforderlich. Die Höhe der Impulse wird durch eine Zener-Diode D3 stabilisiert.

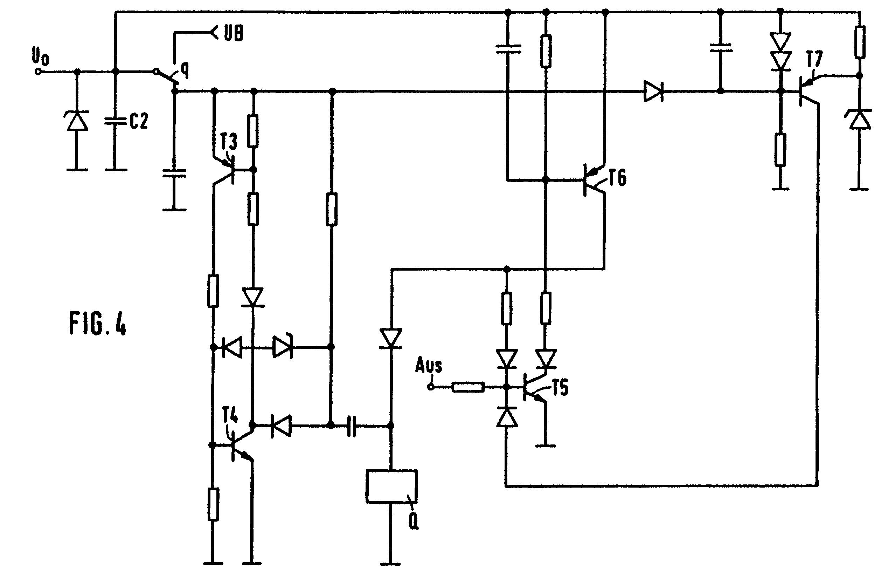

In Fig. 4 ist eine Einschalttriggerstufe dargestellt, mit der erreicht werden soll, daß die Betriebsspannung UB an sämtliche Stufen des in Fig. 1 dargestellten elektronischen Textgebers, insbesondere die Steuervorrichtung und den Mikroprozessor erst dann angelegt wird, wenn die Eingangsspannung UO, die beim Einschalten infolge des hohen Kapazitätswertes des Kondensators C2 relativ langsam ansteigt, einen vorgesehenen Mindestwert überschreitet. Zu diesem Zweck enthält die Triggerschaltung eine erste durch die Schalttransistoren T3 und T4 gekennzeichnete Schaltstufe, über die bei Erreichen eines vorgegebenen Wertes der Eingangsspannung UD ein bistabiles Relais Q aktiviert wird. Bei Aktivierung des Relais Q schaltet der Kontakt q um, und die Betriebsspannung UB wird an die einzelnen Stufen des Textgebers angelegt. Mit dem Umlegen des Kontaktes q wird die Einschalttriggerstufe selbst wieder abgeschaltet, so daß sie keinen Ruhestrom aus der Fernsprechleitung entnimmt. Beim Ausschalten der Gesamtvorrichtung wird an den Eingang AUS einer weiteren durch die Schalttransistoren T5 und T6 gekennzeichneten Stufe ein Signal gegeben, durch welches das bistabile Relais Q wieder rückgesetzt und damit der Kontakt q umgelegt wird, so daß die Einschalttriggerstufe von diesem Augenblick an wieder betriebsbereit ist für einen neuen Einschaltvorgang. Bei einem unvorhergesehenen Spannungsausfall tritt die durch den Schalttransistor T7 gekennzeichnete Stufe in Funktion, durch welche ebenfalls über die Schalttransistoren T5 und T6 das bistabile Relais Q rückgesetzt und die Einschalttriggerstufe wieder betriebsbereit geschaltet wird.

## Patentansprüche

1. Elektronischer Textgeber zur Abgabe und/oder Aufnahme von Texten in Form von analogen elektrischen Signalen über eine Fernsprechleitung, bei dem die Texte in digitaler Form in einem Textdatenspeicher (2) speicherbar sind und das Ein/Auslesen der Textdaten durch eine, einen Mikroprozessor enthaltende Steuervorrichtung (1) erfolgt und zwischen dem Ein/Ausgang für Textdaten und dem Textdatenspeicher (2) ein Analog/Digital-Digital/Analog-Wandler (4) angeordnet ist und der eine Pausenerkennungsvorrichtung (7) zur Erkennung einer Pause in den digitalen Daten eines aufzunehmenden oder abzugebenden Textes aufweist sowie einen Zähler, der bei Textaufnahme durch ein Pausenanfangssignal in Vorwärtsrichtung gestartet und durch ein Pausenendesignal gestoppt wird, wobei im Textdatenspeicher (2) der Pausenanfang gespeichert und dann während des Vorwärtslaufes des Zählers das Einlesen von Daten unterbrochen wird und am Ende des Vorwärtslaufes vom Zähler ein, die ausgezählte Pausenlänge kennzeichnendes Signal abgegeben und gespeichert wird und bei dem bei Textabgabe ein weiterer Zähler durch die Signale für den Pausenanfang und die Pausenlänge auf einen der gespeicherten Pausenlänge entsprechenden Wert voreingestellt und in Rückwärtsrichtung gestartet wird, wobei während des Rückwärtslaufes dieses Zählers das Auslesen von Daten aus dem Textdatenspeicher (2) unterbrochen wird und der Zähler eine Vorrichtung (8) zur Erzeugung von digitalen Pausensignalen ansteuert, die dem Digital/Analog-Wandler (4) zugeführt werden und am Ende des Rückwärtslaufes ein Pausenendesignal abgegeben wird, dadurch gekennzeichnet, daß zwischen dem Analog/Digital-Digital/Analog-Wandler (4) und dem Textdatenspeicher (2) ein Seriell/Parallel-Parallel/Seriell-Wandler (5) angeordnet ist und ein einziger Pausenlängezähler (6) vorhanden ist, der bei Textaufnahme vorwärtslaufend und bei Textabgabe rückwärtslaufend die Pausenlängen auszählt, wobei die digitalen Pausensignale dem Parallel/Seriell-Wandler zugeführt werden und daß der Textdatenspeicher (2) aus Festwertspeichern aufgebaut ist, wobei mindestens ein Teil der Festwertspeicher aus elektrisch programmierbaren und löschbaren Festwertspeichern (EEPROM) besteht und daß die Stromversorgung des Textgebers über die Fernsprechleitung erfolgt, wobei zur Erzeugung von Programmier- und Löschspannungen für die programmierbaren und löschbaren Festwertspeicher eine Vorrichtung (10) mit einer an die Fernsprechleitung angeschlossenen, durch die Steuervorrichtung (1) angesteuerten Impulsstufe (Ü-T1) dient, durch welche Programmier- und Löschspannungen in Form von Einzelimpulsen vorgegebener zeitlicher Länge aus der über die Fernsprechleitung zugeführten elektrischen Energie erzeugt werden.

2. Elektronischer Textgeber nach Anspruch 1, dadurch gekennzeichnet, daß die Vorrichtung (7) zur Erkennung einer Textpause eine Gatterschaltung (U1 bis U8) aufweist, durch die beim Vorliegen vorgegebener, den Sprachpausen zugeordneter digitaler Signale auf der Datenbusleitung (3) zwischen dem Seriell/Parallel-Parallel/Seriell-Wandler (5) und dem Textdatenspeicher (2) das Pausenanfangssignal erzeugt wird.

3. Elektronischer Textgeber nach Anspruch 1 oder 2, dadurch gekennzeichnet, daß die Vorrichtung (7) zur Erkennung einer Textpause eine Zeitschaltung (9) ansteuert, durch die zu Beginn einer Aufnahme vor der ersten Speicherung von Textdaten bei Überschreitung einer ersten vorgegebenen Pausenlänge die Aufnahme unterbrochen und erneut gestartet wird.

4. Elektronischer Textgeber nach Anspruch 3, dadurch gekennzeichnet, daß durch die Zeitschaltung (9) während der Aufnahme Textpausen bei Überschreitung einer zweiten vorgegebenen Pausenlänge auf diese Pausenlänge normiert werden.

5. Elektronischer Textgeber nach Anspruch 3 oder 4, dadurch gekennzeichnet, daß durch die Zeitschaltung (9) bei Überschreitung einer dritten vorgegebenen Pausenlänge die Aufnahme abgebrochen wird.

6. Elektronischer Textgeber nach einem der Ansprüche 1 bis 5, dadurch gekennzeichnet, daß die Vorrichtung (8) zur Erzeugung von digitalen Pausensignalen eine Schaltung (8a-8b-D) aufweist, durch welche ausgewählte Leitungen der Datenbusleitung (3) zwischen dem Parallel/Seriell-Wandler (5) und dem Textdatenspeicher (2) gesteuert von der Steuervorrichtung (1) mit einem gegebenen Potential beaufschlagt werden.

7. Elektronischer Textgeber nach einem der Ansprüche 1 bis 6, dadurch gekennzeichnet, daß die Impulsstufe (10) einen Übertrager (Ü) aufweist, dessen Primärwicklung (ÜP) unter Einschaltung eines von der Steuervorrichtung (1) her durchschaltbaren Schalttransistors (T1) gleichspannungsmäßig an die Fernsprechleitung angeschlossen ist und bei dem ein Ende der Sekundärwicklung (ÜS) ebenfalls gleichspannungsmäßig an die Fernsprechleitung angeschlossen ist, während das andere Ende mit dem Ausgang (P1) der Impulsstufe unter Parallelschaltung eines Kondensators (C1) verbunden ist.

8. Elektronischer Textgeber nach Anspruch 7, dadurch gekennzeichnet, daß zwischen die Sekundärwicklung (ÜS) des Übertragers und den Ausgang (P1) der Impulsstufe ein weiterer Schalttransistor (T2) eingeschaltet ist, dessen Basis an einen zwischen Sekundärwicklung (ÜS) und Primärwicklung (ÜP) eingeschalteten Spannungsteiler (R1, R2) angeschlossen ist.

9. Elektronischer Textgeber nach einem der Ansprüche 1 bis 8, gekennzeichnet durch eine Einschalttriggerstufe (T3 bis T7-Q), durch welche beim Einschalten die Speisespannung (UB) erst nach Überschreiten eines vorgegebenen Schwellenwertes den Einzelstufen des Textgebers zugeführt wird, wobei die Umschaltung über ein bistabiles Relais (Q) erfolgt, durch das gleichzeitig die Einschalttriggerstufe wieder abgeschaltet wird.

10. Elektronischer Textgeber nach Anspruch 9, gekennzeichnet durch eine Spannungsüberwachungsstufe (T5-T6-T7), durch die beim Abschalten des Textgebers oder bei einem Spannungsausfall die Einschalttriggerstufe über das bistabile Relais (9) wieder betriebsbereit geschaltet wird.

11. Elektronischer Textgeber nach einem der Ansprüche 1 bis 10, dadurch gekennzeichnet, daß die Speisespannungen den Festwertspeichern in Einzelimpulsen gesteuert von der Steuervorrichtung (1) so zugeführt werden, daß sie nur während eines Ein- oder Auslesevorgangs anliegen.

## Claims

1. Electronic text transmitter for transmitting and/or recording texts in the form of analog electric signals via a telephone line, with which the texts can be stored in digital form in a text data memory (2) and the reading-in/reading-out of the text data is performed by a control device (1), containing a microprocessor, and there is an analog/digital-digital/analog converter (4) arranged between the input/output for text data and the text data memory (2) and which transmitter has an interval-detecting device (7) for detecting an interval in the digital data of a text to be recorded or transmitted as well as a counter, which in the case of recording text is started in the forward direction by a beginning-of-interval signal and is stopped by an end-of-interval signal, the beginning of the interval being stored in the text data memory (2) and then, during the forward running of the counter, the reading-in of data is interrupted and, at the end of forward running, a signal identifying the counted interval length is emitted by the counter and stored and, with which transmitter, in the case of transmitting text a further counter is preset by the signals for the beginning of the interval and the interval length to a value corresponding to the stored interval length and is started in the reverse direction, the reading-out of data from the text data memory (2) being interrupted during reverse running of this counter, and the counter drives a device (8) for generating digital interval signals, which are fed to the digital/analog converter (4), and an end-of-interval signal is emitted at the end of reverse running, characterised in that a serial/parallel-parallel/serial converter (5) is arranged between the analog/digital-digital/analog converter (4) and the text data memory (2) and there is a single interval length counter (6), which counts the interval lengths in forward running in the case of recording text and in reverse running in the case of transmitting text, the digital interval signals being fed to the parallel-/serial converter, and in that the text data memory (2) is constructed from read-only memories, at least some of the read-only memories comprising electrically programmable and erasable read-only memories (EEP-ROMs), and in that the power supply to the text transmitter takes place over the telephone line, a device (10) having a pulse stage (Ü-T1), connected to the telephone line and controlled by the control device (1), serving for generating programming and/or erasing voltages for the programmable and erasable read-only memories, by which pulse stage programming and erasing voltages are generated in the form of individual pulses of a predetermined length of time from the electric energy supplied over the telephone line.

2. An electronic message transmitter as claimed in claim 1, characterized in that the interval-detecting assembly (7) comprises a gate circuit (U1 to U8) by means of which the interval-commencing signal is generated upon the appearance of digital signals assiociated with the message intervals, on the data bus line (3) between the serial/parallel-parallel/serial converter (5) and the text data storage assembly (2).

3. An electronic message transmitter as claimed in claim 1 or 2, characterized in that the interval-detecting device (7) selects a timer circuit (9) by means of which, at the beginning of a recording prior to the first storage of message data, the recording is interrupted and restarted in case of exceeding a first predetermined length of interval.

4. An electronic message transmitter as claimed in claim 3, characterized in that, during recording, any message intervals exceeding a second predetermined length of interval, are standardized to this length of interval by the timer circuit (9).

5. An electronic message transmitter as claimed in claim 3 or 4, characterized in that, in case of exceeding a third predetermined length of interval, the recording is discontinued by the timer circuit (9).

6. An electronic message transmitter as claimed in one of claims 1 to 5, characterized in that the assembly (8) for generating digital interval signals comprises a circuit (8a-8b-D) by means of which selected lines of the data bus line (3) are acted upon with a given potential between the parallel/serial converter (5) and the text data storage assembly (2), by the control unit (1) in controlled manner.

7. An electronic message transmitter as claimed in one of claims 1 to 6, characterized in that the pulse stage (10) comprises a transformer (Ü) the primary winding (ÜP) of which is connected to the telephone line in DC manner whereby a switching transistor (T1) adapted to be through-connected by the control unit (1), is

7

interconnected, one end of the secondary winding (ÜS) being likewise connected to the telephone line in DC manner whereas the other end is connected with the output (P1) of the pulse stage whereby a capacitor (C1) is connected in parallel.

8. An electronic text transmitter as claimed in claim 7, characterized in that a second switching transistor (T2) is interconnected between the secondary winding (ÜS) of the transformer and the output of the pulse stage, the basis of said switching transistor being connected to a voltage divider (R1, R2) which is interconnected between the secondary winding (ÜS) and the primary winding (ÜP).

9. An electronic message transmitter as claimed in one of claims 1 to 9, characterized by a switch-in triggering stage (T3 to T7 - Q) by means of which, upon actuation, the supply voltage (UB) is supplied to the separate stages of the message transmitter only after the exceeding of a predetermined limit value, whereby the switch-over is achieved through a bistable relay (Q) by means of which, simultaneously, the switch-in triggering stage is again switched off.

10. An electronic message transmitter as claimed in claim 9, characterised by a voltage control stage (T5-T6-T7) by means of which, upon disconnecting the message transmitter or in case of a power failure, the switch-in triggering stage, through the bistable relay (Q), is again switched to ready for work.

11. An electronic message transmitter as claimed in one of claims 1 to 10, characterized in that the supply voltages are supplied from the control unit (1) to the set-value memories in separate pulses in controlled manner in such a way that they are applied only during a read-in or read-out operation.

## Revendications

1. Emetteur de textes électroniques pour émettre et/ou recevoir des textes sous forme de signaux électriques analogiques par un conducteur téléphonique, dans lequel les textes peuvent être mis en mémoire sous forme numérique dans une mémoire de données de textes (2) et l'introduction/lecture des données de textes s'effectue au moyen d'un dispositif de commande (1) contenant un microprocesseur, tandis que, entre l'entrée/sortie pour les données de textes et la mémoire de données de textes (2) est disposé un convertisseur analogique/numérique -numérique/analogique (4), et qui présente un dispositif de détection de pauses (7) pour détecter une pause dans les données numériques d'un texte à recevoir ou à émettre, ainsi qu'un compteur, qui est mis en route en sens direct par un signal de début de pause en cas de réception de textes et est arrêté par un signal de fin de textes, tandis que le début de pause est mis en mémoire dans la mémoire de données de textes, puis, pendant l'avancement du compteur en sens direct, l'introduction des données est interrompue et, à la fin de l'avancement en sens direct du compteur, un signal est émis et mis en mémoire, ce signal caractérisant la longueur de pause mesurée, un autre compteur étant réglé d'avance en cas d'émission de textes, pour les signaux destinés au début des pauses et à la longueur des pauses, sur une valeur correspondant à la longueur de pause mise en mémoire, et est mis en marche en sens inverse, tandis que, pendant la marche en sens inverse de ce compteur, la lecture des données provenant de la mémoire de données de textes (2) est interrompue, et le compteur commande un dispositif (8) pour créer des signaux de pauses numériques, qui sont amenés au convertisseur numérique/analogique (4) et, à la fin de la marche en sens inverse, un signal de fin de pause est émis, caractérisé en ce qu'entre le convertisseur analogique/numérique - numérique/analogique (4) et la mémoire de données de textes (2) est disposé un convertisseur série/parallèle - parallèle/série (5) et qu'est présent un compteur unique de longueur de pause (6) qui, en cas de réception de texte, compte les longueurs de pauses dans le sens direct et, en cas d'émission de textes, dans le sens inverse, les signaux de pauses numériques étant amenés au convertisseur parallèle/série, et que la mémoire de données de textes (2) est constituée de mémoires fixes, tandis qu'au moins une partie des mémoires fixes est constituée de mémoires fixes programmables et effaçables (EEPROM), et que l'alimentation en courant de l'émetteur de textes est réalisée par l'intermédiaire d'un conducteur téléphonique, tandis que, pour obtenir des tensions de programmation et d'effacement pour la mémoire fixe programmable et effaçable, on utilise un dispositif (10) avec un étage d'impulsions (Ü-T1), commandé par le dispositif de commande (1) et raccordé au conducteur téléphonique, étage par lequel des tensions de programmation et d'affacement sont produites sous forme d'impulsions individuelles de longueur de temps prédéterminée, provenant de l'énergie électrique amenée par le conducteur téléphonique.

2. Emetteur de textes électronique selon la revendication 1, caractérisé en ce que le dispositif (7) pour détecter une pause de texte comporte un circuit de porte (U1 à U8) permettant de créer le signal de début de pause quand apparaissent des signaux numériques prédéterminés correspondant aux pauses de conversation sur le conducteur de bus de données (3) entre le convertisseur série/parallèle-parallèle/ série (5) et la mémoire de données de textes (2).

3. Emetteur de textes électronique selon la revendication 1 ou 2, caractérisé en ce que le dispositif (7) pour détecter une pause de texte commande un circuit de temps (9) assurant, au début de la réception d'un premier groupe de données de textes mises en mémoire et en cas de dépassement d'une première longueur de pause prédéterminée, l'interruption de la réception et le recommencement de celle-ci.

4. Emetteur de textes électronique selon la revendication 3, caractérisé en ce que le circuit de temps (9) détermine, pendant la réception et en cas de dépassement d'une seconde longueur de pause prédéterminée, des pauses de textes adaptées à cette longueur de pause.

5. Emetteur de textes électronique selon la revendication 3 ou 4, caractérisé en ce que le circuit de temps (9) interrompt la réception en cas de dépassement d'une troisième longueur de pause prédéterminée.

6. Emetteur de textes électronique selon l'une des revendications 1 à 5, caractérisé en ce que le dispositif (8) présente un circuit (8a-8b-D) pour créer des signaux de pause numériques qui sont transmis à des conducteurs choisis du conducteur du bus de données (3) entre le convertisseur paralléle/série (5) et la mémoire de données de textes (2), avec commande par le dispositif de commande (1) sous un potentiel donné.

7. Emetteur de textes électronique selon l'une des revendications 1 à 6, caractérisé en ce que l'étage d'impulsions (10) présente un transducteur (Ü) dont l'enroulement primaire (ÜP) est raccordé au conducteur téléphonique en tension continue en cas d'enclenchement d'un transistor de commutation (T1) commutable par le dispositif de commande (1), tandis qu'une extrémité de l'enroulement secondaire (ÜS) est également raccordée en tension continue au conducteur téléphonique, alors que l'autre extrémité est reliée à la sortie (P1) de l'étage d'impulsions avec montage en parallèle d'un condensateur (C1).

8. Emetteur de textes électronique selon la revendication 7, caractérisé en ce qu'un autre transistor de commutation (T2) est monté entre l'enroulement secondaire (ÜS) du transducteur et la sortie (P1) de l'étage d'impulsions, la base de ce transistor étant raccordée à un diviseur de tension (R1, R2) monté entre l'enroulement secondaire (ÜS) et l'enroulement primaire (ÜP).

9. Emetteur de textes électronique selon l'une des revendications 1 à 8, caractérisé par un étage d'enclenchement (T3 à T7-Q), dont l'enclenchement provoque l'application de la tension d'alimentation (UB) après le dépassement d'une valeur de seuil prédéterminée de l'étage unique de l'émetteur de textes, tandis que la commutation s'effectue au moyen d'un relais bistable (Q), qui assure simultanément le redéclenchement de l'étage d'enclenchement.

10. Emetteur de textes électronique selon la revendication 9, caractérisé par un étage de surveillance de tension (T5-T6-T7) qui enclenche à nouveau l'étage d'enclenchement rendu ainsi prêt à fonctionner au moyen d'un relais bistable (Q), en cas de déclenchement de l'émetteur de textes ou de panne de courant.

11. Emetteur de textes électronique selon l'une des revendications 1 à 10, caractérisé en ce que les tensions d'alimentation sont appliquées aux mémoires fixes sous forme d'impulsions individuelles commandées par le dispositif de commande (1), de façon à ce qu'elles n'existent que pendant une opération de lecture ou de réception.

# FIG.1

FIG.2

Binärzähler

Zeit - S.

P₁  P₂  AL  6  0 AW R WL Z  Z1 Z2 Z3  P₁/₂

# FIG.3

FIG. 4